Europäisches Patentamt

European Patent Office

Office européen des brevets

(11) Publication number: **0 480 602 A1**

# EUROPEAN PATENT APPLICATION

(21) Application number: **91308783.9**

(22) Date of filing: **26.09.91**

(51) Int. Cl.5: **B60K 23/02**, G05G 7/04

(30) Priority: **11.10.90 GB 9022123**

(43) Date of publication of application:
**15.04.92 Bulletin 92/16**

(84) Designated Contracting States:
**DE FR GB IT SE**

(71) Applicant: **JAGUAR CARS LIMITED**
**Browns Lane**
**Allesley Coventry CV5 9DR(GB)**

(72) Inventor: **Bruder, Martin James**
**28 Lonsdale Road, Lillington**
**Leamington Spa CV32 7EP(GB)**

(74) Representative: **Watts, Peter Graham et al**
**Anthony Cundy & Co. 384 Station Road**
**Dorridge**
**Solihull West Midlands B93 8ES(GB)**

(54) Clutch operating mechanism for a motor vehicle.

(57) In a clutch operating mechanism, a clutch pedal
(10) is mounted adjacent one end about a pivot (11)
so that it may be moved between a rest position in
which the clutch will be engaged and a depressed
position in which the clutch will be disengaged, the
clutch pedal (10) has an arm (15) extending from the
pivoted end thereof, the end of the arm (15) engag-
ing and depressing a leaf spring element (20) as it
moves between its rest and depressed positions, the
point of contact between the arm (15) and spring
(20) moving through an over-centre position intermediate of the rest and depressed positions of the
pedal (10), so that on one side of the over-centre
position the spring (20) will apply a load to the pedal
(10) urging it towards its rest position and on the
other side of the over-centre position, the spring (20)
will apply a load to the pedal (10) urging it towards
its depressed position.

FIG 1

EP 0 480 602 A1

The present invention relates to clutch operating mechanisms for motor vehicles.

In view of the loads necessary to maintain driving engagement between the driving and driven plates of a clutch, substantial spring loads are required. These spring loads must be released by operation of a clutch pedal and even using suitable hydraulic and/or mechanical lever systems to reduce the effort that need be applied to the clutch pedal, significant effort is still required to release the clutch. In conventional clutch pedal mechanisms, a pull-off spring may also be used to ensure that the pedal returns to its rest position and takes up any clearances in the operating mechanism. This pull-off spring will add further to the effort that must be applied to the clutch pedal, to release the clutch.

The present invention provides a clutch operating mechanism which will reduce the effort that needs to be applied to the clutch pedal, to release the clutch.

According to one aspect of the present invention, a clutch operating mechanism comprises a clutch pedal mounted adjacent one end about a pivot and adapted to be moved between a rest position in which the clutch will be engaged and a depressed position in which the clutch will be disengaged, the clutch pedal having an arm extending from the pivotted end thereof, characterised in that the end of the arm engages a leaf spring element, the leaf spring element being located with respect to the pivot such that it will be continuously engaged and deflected by the arm as the pedal moves between its rest and depressed positions, the point of contact between the arm and spring moving through an over-centre position intermediate of the rest and depressed positions of the pedal, so that on one side of the over-centre position the spring will apply a load to the pedal urging it towards its rest position and on the other side of the over-centre position, the spring will apply a load to the pedal urging it towards its depressed position.

The operating mechanism described above will thus provide spring loading of the clutch pedal when in its rest position, in order to take up any clearances in the mechanism; but when disengaging the clutch, once the point of contact between the arm and spring is past the over-centre position, the spring will provide assistance which will reduce the effort required to disengage the clutch. It will be appreciated, that the load applied by the leaf spring element in opposition to the clutch spring must be lower than that of the clutch spring, so that the pedal will be returned back past the over-centre position by the excess load applied by the clutch spring, upon release of the pedal.

The end of the arm engaging the spring element may be provided with a bearing surface which will slide over the surface of the leaf spring engaged thereby. However, in order to obtain smooth movement of the pedal, a roller bearing is preferably mounted on the end of the arm for engagement of the spring.

The spring element may be formed from a plurality of spring steel plates, the number of plates being varied to provide the required spring assistance. Alternatively or in addition, means may be provided for adjusting the position and/or orientation of the spring element relative to the pivot of the pedal in order to vary the deflection thereof.

An embodiment of the invention is now described, by way of example only, with reference to the accompanying drawings, in which:

Figure 1 is a diagrammatic illustration of an operating mechanism in accordance with the present invention, with the clutch pedal in the rest position;

Figure 2 is a view of the operating mechanism shown in Figure 1, with the clutch pedal in an intermediate position; and

Figure 3 is a view of the operating mechanism shown in Figure 1, with the clutch pedal in the fully depressed position.

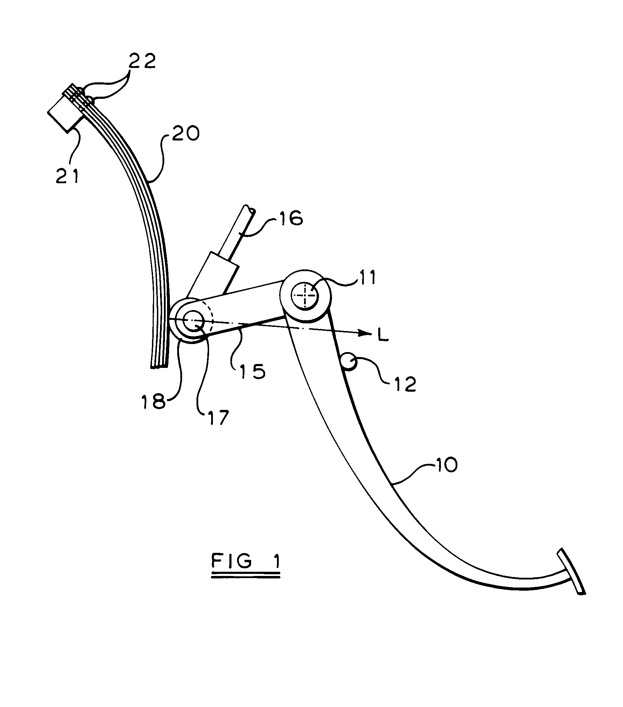

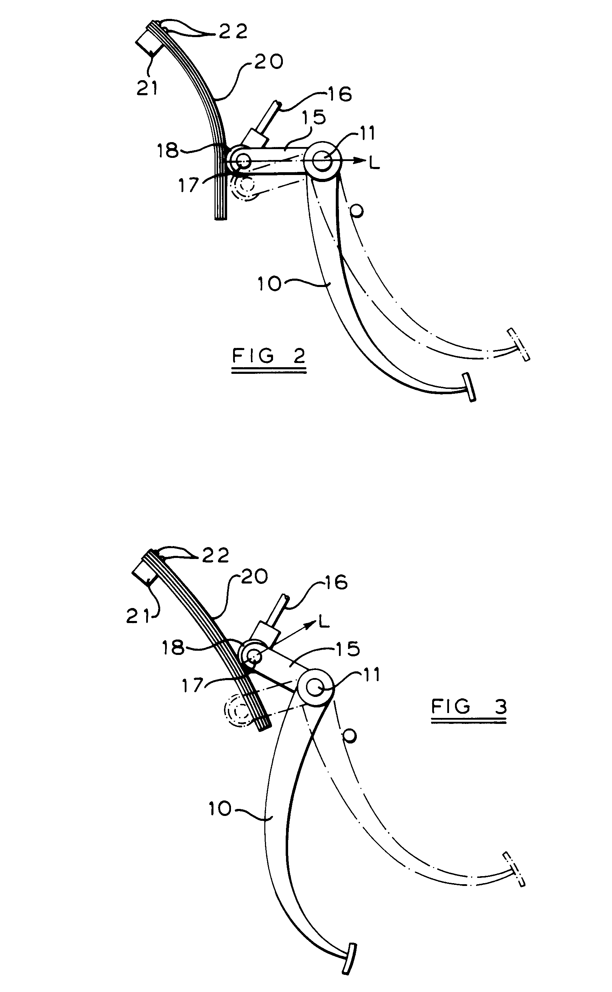

Figures 1 to 3 illustrate a clutch operating mechanism for a motor vehicle, comprising a clutch pedal 10 mounted on pivot 11 for movement between a rest position defined by stop 12 (as illustrated in Figure 1) and a fully depressed position (as illustrated in full line in Figure 3).

An arm 15 extends from the pivotted end of pedal 10 and is connected to the push rod 16 of a hydraulic master cylinder (not shown) by pivot 17. A roller bearing 18 is also mounted on the end of arm 15 remote from the pivot 11.

A leaf spring assembly 20 comprising a plurality of spring steel plates is located on a mounting block 21 by means of a pair of rivets 22. The mounting block 21 is mounted on the vehicle so that the spring element 20 will be continuously engaged and deflected by the roller bearing 18 as the pedal 10 moves between its rest position and its fully depressed position. The mounting block 21 is positioned relative to the pivot 11 such that the spring 20 acting on roller bearing 18 will apply a load L to the pedal 10 which; when the pedal is in the rest position will urge the pedal 10 towards the stop 12; at an intermediate position (as illustrated in Figure 2) will act through the axis of pivot 11; and beyond the intermediate position (as illustrated in Figure 3) will urge the pedal 10 towards the fully depressed position.

In use, initial effort applied to the clutch pedal 10 will be required to oppose the load L applied by the spring element 20. However, once the pedal moves past the intermediate position illustrated in Figure 2, the spring element 20 will assist the effort applied by the operator to compress the clutch spring and disengage the clutch. Upon release of the pedal, the load applied by the clutch spring which is greater than that applied by spring element 20, will return the pedal 10 to its rest position. The mechanism described above will consequently reduce the effort required to disengage the clutch, roller bearing 18 ensuring that the pedal moves smoothly between the rest and fully depressed positions.

The level of assistance can be altered by increasing or decreasing the spring rate of spring element 20 which may be achieved by adding or removing one or more of the spring steel plates or by adjusting the position and orientation of mounting block 21 relative to the pivot 11 to adjust the deflection of the spring element 20.

Various modifications may be made without departing from the invention. For example although the operating mechanism disclosed above operates a hydraulic system, it may alternatively be used with mechanical lever systems or cable systems.

**Claims**

1. A clutch operating mechanism comprising a clutch pedal (10) mounted adjacent one end about a pivot (11) and adapted to be moved between a rest position in which the clutch will be engaged and a depressed position in which the clutch will be disengaged, the clutch pedal (10) having an arm (15) extending from the pivotted end thereof, characterised in that the end of the arm (15) engages a leaf spring element (20), the leaf spring element (20) being located with respect to the pivot (11) such that it will be continuously engaged and deflected by the arm (15) as the pedal (10) moves between its rest and depressed positions, the point of contact between the arm (15) and spring (20) moving through an over-centre position intermediate of the rest and depressed positions of the pedal (10) so that on one side of the over-centre position the spring (20) will apply a load to the pedal (10) urging it towards its rest position and on the other side of the over-centre position, the spring (20) will apply a load to the pedal (10) urging it towards its depressed position.

2. A clutch operating mechanism according to Claim 1 characterised in that the leaf spring element (20) is formed from a plurality of spring steel plates.

3. A clutch operating mechanism according to Claim 1 or 2 characterised in that the spring element (20) is secured to a mounting block (21) by which it may be mounted on the vehicle in the required position and orientation relative to the pivot (11).

4. A clutch operating mechanism according to any one of the preceding claims characterised in that a roller bearing (18) is provided at the end of the arm (15), for engagement of the spring element (20).

FIG 1

FIG 2

FIG 3

**European Patent Office**

## EUROPEAN SEARCH REPORT

Application Number

**EP 91 30 8783**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 8, no. 73 (M-287)[1510], 5th April 1984; & JP-A-58 218 428 (NISSAN) 19-12-1983 * Abstract; figure 3 * | 1 | B 60 K 23/02 G 05 G 7/04 |
| | – – – | | |
| Y | PATENT ABSTRACTS OF JAPAN, (M-294), 4th May 1984; & JP-A-59 011 926 (FUJI KIKOU) * Abstract; figure 2 * | 1 | |
| | – – – | | |
| A | FR-A-2 157 716   (RENAULT) * The whole document * | 1 | |
| | – – – – – | | |

TECHNICAL FIELDS SEARCHED (Int. Cl.5)

B 60 K
G 05 G
F 16 D

The present search report has been drawn up for all claims

| Place of search | Date of completion of search | Examiner |
|---|---|---|
| The Hague | 07 January 92 | FLODSTROEM J.B. |